# EUROPÄISCHE PATENTANMELDUNG

(11) **EP 4 400 450 A1**
(43) Veröffentlichungstag der Anmeldung: **17.07.2024**
(21) Anmeldenummer: 23216677.7
(22) Anmeldetag: 14.12.2023
(51) Int. Cl.: B65G 1/02, B65G 1/04, B65G 1/06

(54) **FAHRSCHIENE SOWIE REGAL MIT FAHRSCHIENE**

(30) Priorität: 12.01.2023 DE 102023100596
(71) Anmelder: Winkler, Max, 8010 Graz (AT)
(72) Erfinder: Winkler, Max, 8010 Graz (AT)
(74) Vertreter: Cohausz & Florack

(57) **Zusammenfassung**

Fahrschiene, insbesondere für ein Regal eines Regallagers, wobei die Fahrschiene sich entlang einer Längsachse erstreckt und die Fahrschiene ein Querschnittsprofil mit zumindest drei Schenkeln hat, derart, dass ein erster der Schenkel ein Fahrflächenschenkel ist, der zusammen mit der Längsachse der Fahrschiene eine Fahrfläche für eine Lagermaschine aufspannt, ein zweiter der Schenkel ein Führungsflächenschenkel ist, der zusammen mit der Längsachse der Fahrschiene eine Führungsfläche aufspannt, und ein dritter der Schenkel ein Regalsteherschenkel ist, der zusammen mit der Längsachse der Fahrschiene eine Anbaufläche für einen Regalsteher aufspannt. Der Fahrflächenschenkel ist an einer stirnseitigen Kante der Fahrschiene in einer ersten Schnittebene geschnitten, wobei die erste Schnittebene um eine Flächennormale der Fahrfläche verschwenkt ist.

## Beschreibung

Der Gegenstand betrifft eine Fahrschiene sowie ein Regal oder ein Regallager mit einer solchen Fahrschiene.

Regale sowie Regallager für das automatische Ein- und Auslagern von Gütern unter Verwendung von Lagermaschinen, die sich mittels am Regal angebrachten Fahrschienen am Regal abstützen und entlang der Fahrschienen bewegt werden, sind hinlänglich bekannt. Hier betrachtete Lagermaschinen werden auch als Lagerautomaten, Shuttles, Mini-Shuttles, Schlitten, Raupen oder Regalbediengeräte bezeichnet. Hier betrachtete Lagermaschinen können Stückgüter, Schüttgüter, Tablare, Körbe, Kisten, Kartons oder dergleichen Ein- und Auslagern.

Der Gegenstand betrifft eine verbesserte Konstruktion von Fahrschienen in Regaleinrichtungen für Lagermaschinen in Warenlagern, insbesondere für Fahrschienen, die sich an oder in der Regalkonstruktion abstützen. Derartige Systeme sind zum Beispiel bekannt aus der EP 0 733 563 A1 und der DE 101 423 95 A1.

Die hier im Wesentlichen betrachteten Regale und Regallager, gemeinhin auch Regaleinrichtungen oder Regalkonstruktionen genannt, sind üblicherweise geschraubte und/oder gesteckte Zusammenbauten aus Blechprofilen. Diese Regalkonstruktionen unterliegen typischen Stahlbautoleranzen, definiert unter anderem durch die Norm FEM9.831. Aus dieser Norm ergeben sich Toleranzen von ± 3 mm für die Feldlänge, also das horizontale Regalraster zwischen zwei Regalstehern. Ein Regalraster hat in der Regel eine Feldlänge zwischen 2m und 4m. Somit sind innerhalb des Regalrasters jeweils in diesen Abständen Regalsteher montiert.

Hier betrachteten Fahrschienen, die sich an einer solchen Regalkonstruktion abstützen, werden typischerweise mit Längen zwischen ca. 4 bis ca. 9 m montiert. Normalerweise entspricht eine Länge einer Fahrschiene einem Fahrschienensegment. Ein Fahrschienensegment überspannt in der Regel einem ganzzahligen Vielfachen der Feldlänge des Regalrasters. Um Missverständnisse zu vermeiden, wird darauf hingewiesen, dass eine Fahrschiene im Sinne dieser Anmeldung in Fachkreisen auch als Fahrschienensegment bezeichnet wird und dass mehrere Fahrschienensegmente zusammen eine Gasse bilden. Hier ist jedoch eine Fahrschiene ein Segment. Mehrere Fahrschienen können hintereinander angeordnet werden. Entlang eines Regals können mehrere Fahrschienensegmente (die hier als Fahrschienen bezeichnet werden) nacheinander angeordnet sein. So kann es sein, dass N Segmente (hier als Fahrschienen bezeichnet) zu je x m eine Gesamtschiene (hier als Gasse bezeichnet) von N*x m bilden. Typischerweise ist ein Fahrschienensegment (also das aus mehreren Fahrschiene gebildete Segment) aus 2 bis 3 Fahrschienen gebildet.

Eine Regaleinrichtung erstreckt sich in der Regel über eine Vielzahl (z.B. N = 2 bis 3, wie zuvor beschrieben) von Feldlängen, so dass sich entlang einer Erstreckung einer Regaleinrichtung in einer horizontalen Ebene regelmäßig mehr als eine Fahrschiene erstreckt. Dadurch kommt es zu Stößen von zwei Fahrschienen. Diese sind in der Regel so angeordnet, dass die Stöße im Bereich eines Regalstehers liegen. An den Regalstehern sind die Fahrschienen befestigt. In einer horizontalen Ebene einer Regaleinrichtung können sich Fahrschienen, Gassen oder dergleichen bevorzugt in einer Längsrichtung oder einer Querrichtung erstrecken, wobei diese beiden Richtungen bevorzugt senkrecht zueinander sind. Eine Gasse kann auch als Fahrgasse oder Lagergasse bezeichnet werden. Eine Lagermaschine kann entlang einer Fahrschiene oder einer Gasse entweder in der Längsrichtung oder der Querrichtung bewegt werden.

Selbst bei engster Toleranz für Fahrschienen dieser Längenklasse nach DIN ISO 2768, Toleranzklasse m, ergibt sich eine erlaubte Längentoleranz der Fahrschiene von ± 3 mm. Aus den erlaubten Toleranzen von Regal und Fahrschiene ergibt sich damit für den Fahrschienenstoß an einer Grenze zwischen zwei Fahrschienen eine Toleranzbreite von 0 bis 12 mm. Während vertikale Toleranzen durch entsprechende vertikale Langlöcher, z.B. in den Anbauflächen der Fahrschienen oder den Regalstehern, bei der Montage weitestgehend ausgeglichen werden können, ist dies entlang der horizontalen Achsen der Fahrschienen nicht möglich.

Eine normgerechte Ausführung von Regalsteher und Fahrschienen in einer Regaleinrichtung ergibt also am Stoß von zwei Fahrschienen einen Spalt von durchschnittlich 6mm, mit erlaubten Maximalwerten vom mehr als 10mm Bereich. Dieser Spalt führt zu einem entsprechenden Eintauchen der Lauf- und/oder Führungsräder der Lagermaschine beim Überfahren des Fahrschienenstoßes.

Bei Warenlagern für Kleinladungsträgern, z.B. Kartons, Tablaren und Kunststoffbehältern mit Grundflächen von beispielsweise ca. 400x300 mm bis 800x600 mm, werden Mini-Shuttles als Lagermaschinen eingesetzt. Für diese Mini-Shuttles werden üblicherweise Lauf- und Antriebsräder mit einem Durchmesser zwischen 40 und 100 mm verwendet. Dies ergibt bei einem 6mm Spalt eine Eintauchtiefe von 0,23 bis 0,1 mm und bei einem 12 mm Spalt eine Eintauchtiefe von 0,92 bis 0,36 mm. Bei rein statischer Betrachtung, also ohne Berücksichtigung des Effekts der sich bewegenden Masse der Lagermaschine, errechnet sich daraus bereits für eine Lagermaschine von 100 kg Masse eine horizontale Kraft auf den Fahrschienenstoß zwischen 18,5 N und 8,2 N (6mm Spalt) bis hin zu zwischen 37,7 N und 14,8 N (12mm Spalt) je Rad.

Das Vorliegen dieser horizontalen Kraft bedeutet gleichzeitig, dass der Stoß ein Hindernis für die Bewegung der Lagermaschine entlang der Fahrschiene darstellt. Damit erhöhen sich die zuvor beschriebenen Kräfte zusätzlich um die Verzögerung der bewegten Masse der Lagermaschine durch den Stoß.

Durch die sich entlang der Fahrschienensegmente auf den Fahrschienen bewegenden Lagermaschinen wird an den Stößen zwischen den Fahrschienen ruckartig diese Kraft in das Regal eingeleitet. Diese permanent während des Betriebs der Lagermaschinen entstehenden Stöße bzw. ruckartige Krafteinleitungen führen zu entsprechenden Erschütterungen und Vibrationen des Regals. Das führt dazu, dass leichte und steife Lagergüter, insbesondere leere oder nahezu leere Ladungsträger (Lagerbehälter) z.B. aus Kunststoff, kleine Positionsänderungen vollführen. Da aufgrund der unter anderem durch die FEM9.831 gegebenen Toleranzen die Stellplätze im Regal meist nie perfekt horizontal sind, ergibt sich durch eine Vielzahl von aufeinander folgenden kleinen Positionsänderungen eine gerichtete Bewegung der insbesondere steifen und leichten Lagergüter. Dieser Effekt wird in der Fachsprache auch als "Dancing Totes" bezeichnet.

Dem Gegenstand lag daher die Aufgabe zugrunde, mittels einer optimierten Gestaltung der Fahrschienen die Bewegung von insbesondere steifen und/oder leichten Lagergütern, hervorgerufen durch die sich entlang der Fahrschienen bewegenden Lagermaschinen der Lagermaschinen sowie weiterer Anbauteile, insbesondere unter Beibehaltung konstruktiver Vorgaben des Regals zu minimieren.

Diese Aufgabe wird durch eine Fahrschiene nach Anspruch 1, ein Regal nach Anspruch 11 sowie ein Verfahren nach Anspruch 15 gelöst.

Das oben Gesagte und die dortige Offenbarung soll auch für die gegenständliche Fahrschiene sowie das gegenständliche Regal gelten, wobei durch die gegenständliche Lösung die oben beschriebene Krafteinleitung durch ein Eintauchen der Rollen in den Spalt verringert, minimiert oder gänzlich verhindert wird. Durch die gegenständliche Lösung werden die durch die mechanische Bewegung der Lagermaschinen in das Regal eingeleiteten Kräfte und die sich daraus ergebenden mechanischen Belastungen des Lagerguts und des Regals gegenüber herkömmlichen Lösungen erheblich reduziert. Fahrschienen von zwei aneinander angrenzenden Fahrschienensegmenten haben regelmäßig einen Abstand an ihren stirnseitigen Kanten zueinander. Es hat sich gezeigt, dass dieser ein Spalt durch die beanspruchte Konfiguration der stirnseitigen Kanten der Fahrschienen keine Dancing Totes mehr erzeugt. Die Laufrollen können im Wesentlichen ruckelfrei über einen solchen Spalt mit der beanspruchten Konfiguration geführt werden.

Eine Fahrschiene hat eine Erstreckung entlang einer Längsachse. Eine Querschnittsebene der Fahrschiene kann senkrecht zu dieser Längsachse liegen. In der Querschnittsebene können sich eine Querachse und eine Hochachse erstrecken. Die Hochachse kann parallel zur Flächennormalen einer Fahrfläche der Fahrschiene sein. Die Querachse kann senkrecht zur Hochachse und senkrecht zur Längsachse verlaufen. Längsachse, Querachse und Hochachse können jeweils senkrecht zueinander sein. Die Fahrschiene kann eine Erstreckung entlang ihrer Längsachse aufweisen, welche ein Vielfaches ihrer Erstreckung entlang ihrer Querachse und ihrer Hochachse ist. Eine Fahrfläche kann auch als Lauffläche oder Rollfläche bezeichnet werden.

Die Fahrschiene kann ein profiliertes, offenes Rohr sein. Die Fahrschiene kann ein Blechprofil sein. Die Fahrschiene kann aus einem Blech oder Band geformt sein. Die Fahrschiene kann ein geformtes, insbesondere gebogenes, gekantetes, rollgeformtes, kaltgewalztes und/oder stranggepresstes Profil sein. Die Fahrschiene kann auch als Laufschiene bezeichnet werden.

Für die Ein- und Auslagerung von Gütern in Regale eines Regallagers kann eine Lagermaschine beweglich auf zumindest einer Fahrschiene gelagert sein. Insbesondere können zwei parallel zueinander verlaufende Fahrschienen eine Lagergasse bilden, entlang der sich die Lagermaschine bewegen kann. Eine Regalebene kann in einer horizontalen Ebene liegen. In einer Regalebene können zwei senkrecht zueinander verlaufende Lagergassen durch jeweils zwei zueinander parallel verlaufende Fahrschienen gebildet sein. In vertikal benachbarten Regalebenen können abwechselnd senkrecht zueinander verlaufende Lagergassen durch jeweils zwei zueinander parallel verlaufende Fahrschienen gebildet sein. Auch ist es möglich, Fahrschienen zwischen zwei vertikal zueinander beabstandeten Regalebenen anzuordnen, um so Lagermaschinen entlang dieser Fahrschienen zwischen den Regalebenen hin und her bewegen zu können. Eine Regalebene kann auch als Lagerebene bezeichnet werden. Lagerebene und die Ebene einer Gasse können parallel zueinander verlaufen.

Eine Lagermaschine kann eine motorisch betriebene, sich entlang der Fahrschiene bewegende Maschine sein. Die Lagermaschine kann zum Ein- und Auslagern von Lagergütern, z.B. Stückgütern, Behältern, Verpackungseinheiten oder dergleichen gebildet sein. Die Lagermaschine kann entlang der Fahrschiene verfahrbar sein.

Ein Querschnittsprofil durch die Fahrschiene verläuft entlang einer Querschnittsebene. Die Querschnittsebene kann durch die Querachse und die Hochachse aufgespannt sein. Die Längsachse der Fahrschiene kann die Flächennormale der Querschnittsebene sein. In diesem Querschnittsprofil hat die Fahrschiene zumindest drei Schenkel. Diese drei Schenkel sind bevorzugt im Wesentlichen senkrecht zueinander verlaufend. Die drei Schenkel spannen dabei ein U-Profil auf. Es ist jedoch möglich, dass die Fahrschiene mehr als drei Schenkel, insbesondere vier oder fünf Schenkel aufweist. Dabei kann das Querschnittsprofil insbesondere auch U-förmig oder C-förmig sein.

Die Lagermaschine wird entlang der Fahrschiene translatorisch bewegt. Dabei ist die Lagermaschine über Laufrollen an der Fahrschiene beweglich gelagert. Die Laufrollen liegen auf einer Fahrfläche der Fahrschiene rollend auf. Durch einen motorischen Antrieb werden die Laufrollen angetrieben, um die Lagermaschine entlang der Längsachse der Fahrschiene zu bewegen. Laufrollen können auch als Antriebsrollen, Antriebsräder, Laufräder oder dergleichen bezeichnet werden. Die Laufrollen können mechanisch mit dem Antrieb gekoppelt, insbesondere mit einem Motor und können darüber die Lagermaschine entlang der Fahrschiene bewegen. Der Motor ist in der Regel ein Elektromotor. Der Motor wird in der Regel über eine externe Versorgung gespeist, wobei in oder an der Fahrschiene zumindest eine Stromschiene angeordnet ist. Auch gibt es energetisch eigengespeiste Lagermaschinen, z.B. mittels einer Batterie, eines Akkus oder eines Kondensators, z.B. eines Super-Caps, dann kann eine Stromschiene entlang der Fahrschiene entfallen. Die Stromschiene kann isoliert von dem Material der Fahrschiene in oder an der Fahrschiene angeordnet sein. Die Lagermaschine kann über einen elektrischen Abnehmer elektrische Leistung von der Stromschiene beziehen und hierüber den Motor antreiben.

Bei Lagermaschinen, die sich entlang von Fahrschienen im Regal bewegen, wird zwischen zwei verschiedenen Rollen- oder Räderarten unterschieden. Erstens Laufrollen, die das Gewicht der Lagermaschine und des Förderguts tragen. Laufrollen können gleichzeitig Antriebsrollen sein oder Rollen ohne Antrieb. Insbesondere bei Lagermaschinen die entlang mehr als einer Achse im Lager fahren, sind die Laufräder entweder mehrfach ausgeführt, z.B. senkrecht versetzt und mit Hub-/Absenkvorrichtung, oder die Laufräder sind lenk- bzw. drehbar ausgeführt. Zweitens verfügt die Lagermaschine über Führungsrollen. Führungsrollen sind typischerweise senkrecht zu den Laufrollen angeordnet und führen die Lagermaschine entlang der Fahrschiene typischerweise durch Abstützung an einer Führungsfläche oder einem Führungssteg der Fahrschiene.

Ein Schenkel der Fahrschiene ist ein Fahrflächenschenkel. Eine Fahrfläche für die Lagermaschine kann durch die Erstreckungsachse des Fahrflächenschenkels und die Längsachse der Fahrschiene aufgespannt sein. Die Erstreckungsachse des Fahrflächenschenkels kann durch die Querachse gebildet sein. Die Fahrfläche liegt in der durch die Erstreckungsachse des Fahrflächenschenkels und die Längsachse der Fahrschiene aufgespannte Ebene. Auf dem Fahrflächenschenkel können die Laufräder aufliegen und sich entlang der Fahrschiene bewegen.

Um die Lagermaschine entlang der Längsachse der Fahrschiene zu führen und die Laufrollen bei der Bewegung auf der Lauffläche zu halten, hat die Fahrschiene einen Führungsflächenschenkel. Der Führungsflächenschenkel erstreckt sich in einer Erstreckungsachse winklig, bevorzugt rechtwinklig zu dem Fahrflächenschenkel. Die Erstreckungsachse des Führungsflächenschenkels kann durch die Hochachse gebildet sein. Eine Führungsfläche für die Lagermaschine kann durch die Erstreckungsachse des Fahrflächenschenkels und die Längsachse der Fahrschiene aufgespannt sein. Die Führungsfläche liegt in der durch die Erstreckungsachse des Fahrflächenschenkels und die Längsachse der Fahrschiene aufgespannte Ebene. An dem Führungsflächenschenkel liegt zumindest ein Führungsmittel, insbesondere eine Führungsrolle an. Bevorzugt liegt auf einander gegenüberliegenden Seiten des Führungsschenkels jeweils ein Führungsmittel an. Die Führungsmittel werden an dem Führungsschenkel entlang der Längsachse der Fahrschiene geführt, so dass die Lagermaschine entlang der Trajektorie der Führungsfläche bewegt wird.

Zur Befestigung der Fahrschiene an dem Regal wird eine Montage an einem Regalsteher bevorzugt. Hierzu wird die Fahrschiene in der Regel mit dem Regalsteher verschraubt. Um zu verhindern, dass die Bewegung der Lagermaschine durch diese Verschraubung behindert ist, ist an der Fahrschiene ein Regalsteherschenkel vorgesehen. Der Regalsteherschenkel bildet eine Anbaufläche zum Befestigen der Fahrschiene an dem Regalsteher. Der Regalsteherschenkel erstreckt sich in einer Erstreckungsachse winklig, bevorzugt rechtwinklig zu dem Fahrflächenschenkel. Die Erstreckungsachse des Regalsteherschenkels kann durch die Hochachse gebildet sein. Der Regalsteherschenkel erstreckt sich in einer Erstreckungsachse bevorzugt im Wesentlichen parallel zu dem Führungsflächenschenkel.

Der Fahrflächenschenkel liegt bevorzugt zwischen dem Führungsflächenschenkel und dem Regalsteherschenkel. Führungsflächenschenkel, Fahrflächenschenkel und Regalsteherschenkel bilden im Querschnittsprofil ein U. Eine Anbaufläche für die Fahrschiene an einem Regalsteher wird durch die Erstreckungsachse des Regalsteherschenkels und die Längsachse der Fahrschiene aufgespannt. Die Anbaufläche liegt in der durch die Erstreckungsachse des Regalsteherschenkels und die Längsachse der Fahrschiene aufgespannten Ebene.

Bevorzugt grenzt der Fahrflächenschenkel an den Regalsteherschenkel. Ferner verläuft der Führungsflächenschenkel bevorzugt parallel zu dem Regalsteherschenkel. Der Führungsflächenschenkel kann an den Fahrflächenschenkel angrenzen. Der Regalsteherschenkel und/oder der Führungsflächenschenkel können abgekantet sein, um dem Profil eine erhöhte Stabilität zu verleihen.

Problematisch an bekannten Fahrschienen sind deren Stöße, also die Übergänge zwischen zwei Fahrschienen oder Fahrschienensegmenten entlang einer Gasse. Wie oben bereits beschrieben, kommt es an den Übergängen zu dynamischen Erschütterungen durch das Eintauchen der Laufrollen in den Spalt zwischen den Fahrschienen. Dabei ist die Eintauchtiefe der Laufrolle abhängig von der Spaltbreite der Spalts sowie dem Durchmesser der Laufrolle. Die horizontale Kraft, die aufgewendet werden muss, um die Laufrolle aus dem Spalt nach dem Eintauchen heraus zu bewegen, ist abhängig von der Eintauchtiefe und der Masse der Lagermaschine sowie ggf. auf der Lagermaschine gelagertem Gut.

Gegenständlich wird nun eine Fahrschiene vorgeschlagen, durch die das Eintauchen der Laufrolle in den Spalt an einem Stoß zwischen zwei Fahrschienensegmenten erheblich verringert oder gar gänzlich vermieden werden kann. Somit können die oben beschriebenen, mit dem Eintauchen einhergehenden Nachteile verringert werden können. Ein Stoß zwischen zwei an einem Übergang zwischen zwei Fahrschienensegmenten aneinander angrenzenden Fahrschienen bedeutet nicht, dass sich die Fahrschienen zwingend stirnseitig berühren. Im Rahmen der Maßtoleranz der Länge der Fahrschienen ist an einem Stoß in der Regel ein Spalt zwischen den Fahrschienen gebildet. Es kann im Rahmen der Toleranz aber auch zu einer Berührung kommen. Da aber aufgrund der Toleranz stets ein Spalt zwischen zwei aneinander angrenzenden Fahrschienen möglich ist, wird die nachfolgend beschriebene Ausgestaltung der stirnseitigen Kante einer Fahrschiene vorgeschlagen. Wenn von einer stirnseitigen Kante die Rede ist, kann damit die Kante zwischen einer Oberfläche und der Stirnfläche gemeint sein oder die Stirnfläche selber. Der Begriff stirnseitige Kante kann auch als Stirnfläche der Fahrschiene und umgekehrt verstanden werden.

Es wird vorgeschlagen, dass der Fahrflächenschenkel an einer stirnseitigen Kante der Fahrschiene in einer ersten Schnittebene geschnitten ist, wobei die erste Schnittebene um eine Flächennormale der Fahrfläche verschwenkt ist. An seiner stirnseitigen Kante endet die Fahrschiene. Es wird vorgeschlagen, dass die Kante winklig zu der Längsachse der Fahrschiene verläuft. Es wird vorgeschlagen, dass Schnittebene und somit die Stirnfläche der Fahrschiene um die Flächennormale der Fahrfläche verschwenkt ist. Somit ist die Schnittebene, entlang derer die Fahrschiene abgelängt ist, winklig zur Längsachse der Fahrschiene und um eine Flächennormale der Fahrfläche verschwenkt. Verschwenken kann ein Verdrehen oder Rotieren um einen Winkel bedeuten. Verschwenken kann auch ein Abwinkeln bedeuten.

Durch das Abwinkeln der stirnseitigen Kante um die Flächennormale der Fahrfläche können sich zwei aneinander angrenzende Fahrschienen entlang ihrer Längsachse im Bereich der jeweiligen Stirnkanten überlappen. Wenn nachfolgend davon die Rede ist, dass ein Verschwenken, Abwinkeln oder Drehen um eine Achse, z.B. die Flächennormale erfolgt, ist damit gemeint, dass die Achse die Drehachse ist, also eine Drehung, Abwinkelung um diese Achse herum erfolgt. Die Begriffe Verschwenken, Abwinkeln oder Drehen können synonym genutzt werden. Durch das Abwinkeln der Kante können sich zwei aneinander angrenzende Fahrschienen bezogen auf die Querachse überlappen. Dieses Überlappen führt dazu, dass eine Laufrolle nicht oder mit zu einem geringem Teil in einen sich bildenden Spalt eintaucht. Der Spalt zwischen den beiden aneinander angrenzenden Fahrschienen wird dabei zwar nominell nicht immer verkleinert, jedoch liegt die Laufrolle im Bereich des Spaltes im Wesentlichen stets auf der Lauffläche zumindest einer der beiden aneinander angrenzenden Fahrschienen auf. Die Laufrolle liegt in der Regel mit ihrer Rollfläche auf der Fahrfläche einer Fahrschiene auf. Im Bereich des Spalts liegt eine Laufrolle mit einem Teil ihrer Rollfläche auf einer ersten Seite auf einer Fahrfläche einer ersten Fahrschiene auf und auf einer gegenüberliegenden Seite mit einem Teil auf einer Fahrfläche einer daran angrenzenden Fahrschiene auf. Die Laufrolle liegt somit im Bereich des Spalts immer auf zumindest einer, in den meisten Fällen auf beiden Fahrflächen der aneinander angrenzenden Fahrschienen auf. Dabei ist die Auflage der Laufrolle auf der Lauffläche der Fahrschiene über die stirnseitige Kante hinausgehend. Die Laufrolle liegt bevorzugt auf jeweils einem Bereich der Laufflächen zweier aneinander angrenzender Fahrschienen auf, der nicht allein durch die stirnseitige Kante der Lauffläche gebildet ist. Die Laufrolle taucht somit nicht mehr in den Spalt zwischen den Laufflächen ein.

Gemäß einem Ausführungsbeispiel wird vorgeschlagen, dass die erste Schnittebene parallel zu der Flächennormalen der Fahrfläche verläuft. Diese Schnittebene ermöglicht eine besonders einfache Herstellung der Fahrschiene. Die Überlappung der beiden Fahrschienen erfolgt dabei entlang der Querachse der Fahrschienen.

Gemäß einem Ausführungsbeispiel wird vorgeschlagen, dass die erste Schnittebene um eine Querachse verschwenkt ist. Dann verläuft die Schnittebene winklig zu der Flächennormale der Fahrfläche. Diese Schnittebene ist besonders dann von Vorteil, wenn gleichzeitig, wie nachfolgend beschrieben, auch die stirnseitige Kante der Führungsfläche um die Querachse verschwenkt ist. Dann kann insbesondere ein Schnitt entlang einer einzigen Schnittebene durch sowohl die Fahrfläche als auch die Führungsfläche erfolgen.

Die stirnseitigen Kanten von Fahrfläche und Führungsfläche verlaufen bevorzugt entlang einer selben Geraden. Durch das Abwinkeln der stirnseitigen Kante um die Flächennormale der Fahrfläche können sich zwei aneinander angrenzende Fahrschienen entlang ihrer Längsachse im Bereich der jeweiligen Stirnkanten überlappen. Durch das Abwinkeln der Kante können zwei aneinander stoßende Fahrschienen bezogen auf die Querachse überlappen. Dieses Überlappen führt dazu, dass eine Laufrolle nicht oder zu einem geringen Teil in einen sich bildenden Spalt eintaucht. Durch das Abwinkeln der stirnseitigen Kante um die Querachse der Fahrfläche können sich zwei aneinander angrenzende Fahrschienen entlang ihrer Hochachse im Bereich der jeweiligen Stirnkanten überlappen. Durch das Abwinkeln der Kante können zwei aneinander stoßende Fahrschienen bezogen auf die Hochachse überlappen.

Gemäß einem Ausführungsbeispiel wird vorgeschlagen, dass die erste Schnittebene um 30° bis 60° um die Flächennormale der Fahrfläche verschwenkt ist. Es hat sich herausgestellt, dass ein Mindestwinkel von 30° sicherstellt, dass selbst kleinere im Markt befindliche Laufrollen nicht in den Spalt eintauchen. Ein maximaler Winkel von 60° stellt sicher, dass die Überlappung entlang der Längsachse nicht zu groß wird.

Je spitzer jedoch der Winkel und damit der Schnitt wird, desto spitzer und dünner wird das angeschnittene Profil. Und je spitzer und damit dünner das angeschnittene Profil ist, desto instabiler wird es. Neben der dadurch erhöhten Verletzungsgefahr bei der Montage führt die statische Schwächung der Profilspitze vor allem zu einer unerwünschten Quelle für Schwingungen

Gemäß einem Ausführungsbeispiel wird vorgeschlagen, dass die erste Schnittebene um 30° bis 60° um die Querachse der Fahrfläche verschwenkt ist. Es hat sich herausgestellt, dass ein Mindestwinkel von 30° sicherstellt, dass selbst kleinere im Markt befindliche Laufrollen nicht in den Spalt eintauchen. Ein maximaler Winkel von 60° stellt sicher, dass die Überlappung entlang der Längsachse nicht zu groß wird sowie die mechanische Stabilität der Schiene nicht zu sehr beeinträchtigt wird, wie zuvor beschrieben.

Die erste Schnittebene kann auch sowohl um die Flächennormale der Fahrfläche als auch die Querachse der Fahrfläche in der beschriebenen Art und Weise verschwenkt sein.

Gemäß einem Ausführungsbeispiel wird vorgeschlagen, dass der Führungsflächenschenkel an der stirnseitigen Kante der Fahrschiene in einer zweiten Schnittebene geschnitten ist, wobei die zweite Schnittebene um eine Flächennormale der Führungsfläche verschwenkt ist. Somit kann die zweite Schnittebene um die Querachse der Fahrfläche verschwenkt sein. Die zweite Schnittebene verläuft winklig zur Längsachse der Fahrschiene. Durch das Abwinkeln der stirnseitigen Kante können zwei aneinander stoßende Fahrschienen entlang ihrer Längsachse im Bereich der jeweiligen Stirnkanten der Führungsflächen überlappen. Durch das Abwinkeln der Kante der Führungsfläche können zwei aneinander stoßende Fahrschienen bezogen auf die Hochachse mit ihren der Führungsfläche überlappen. Dieses Überlappen führt dazu, dass eine Führungsrolle nicht oder nur zu einem geringen Teil in einen sich bildenden Spalt an der Führungsfläche eintaucht.

Gemäß einem Ausführungsbeispiel wird vorgeschlagen, dass die zweite Schnittebene parallel zu der Flächennormalen der Führungsfläche ist. Diese Schnittebene ermöglicht eine besonders einfache Herstellung der Fahrschiene.

Gemäß einem Ausführungsbeispiel wird vorgeschlagen, dass die zweite Schnittebene um eine Flächennormale der Fahrfläche verschwenkt ist. Die zweite Schnittebene verläuft winklig zur Längsachse der Fahrschiene. Diese Schnittebene ist besonders dann von Vorteil, wenn gleichzeitig, wie zuvor beschrieben, auch die stirnseitige Kante der Fahrfläche um die Flächennormale der Fahrfläche verschwenkt ist. Dann kann insbesondere ein Schnitt entlang einer einzigen Schnittebene durch sowohl die Fahrfläche als auch die Führungsfläche erfolgen. Die stirnseitigen Kanten von Fahrfläche und Führungsfläche verlaufen bevorzugt entlang einer selben Geraden.

Gemäß einem Ausführungsbeispiel wird vorgeschlagen, dass die zweite Schnittebene um 30° bis 60° um die Flächennormale der Führungsfläche und/oder Querachse der Fahrfläche verschwenkt ist. Es hat sich herausgestellt, dass ein Mindestwinkel von 30° sicherstellt, dass selbst die kleinsten um Markt befindlichen Führungsrollen nicht in den Spalt eintauchen. Ein maximaler Winkel von 60° stellt sicher, dass die Überlappung entlang der Längsachse nicht zu groß wird sowie die mechanische Stabilität der Schiene nicht zu sehr beeinträchtigt wird, wie oben beschrieben.

Gemäß einem Ausführungsbeispiel wird vorgeschlagen, dass die zweite Schnittebene um 30° bis 60° um die Flächennormale der Fahrfläche verschwenkt ist. Es hat sich herausgestellt, dass ein Mindestwinkel von 30° sicherstellt, dass selbst die kleinsten um Markt befindlichen Führungsrollen nicht in den Spalt eintauchen. Ein maximaler Winkel von 60° stellt sicher, dass die Überlappung entlang der Längsachse nicht zu groß wird sowie die mechanische Stabilität der Schiene nicht zu sehr beeinträchtigt wird, wie oben beschrieben

Gemäß einem Ausführungsbeispiel wird vorgeschlagen, dass die erste und die zweite Schnittebene identisch sind. In diesem Fall ist die Herstellung der Fahrschiene besonders einfach, da der Schnitt durch die Fahrfläche und die Führungsfläche in nur einem Arbeitsgang möglich ist. Es entfällt die Notwendigkeit, ein Schneidwerkzeug für zwei verschiedene Schnittebenen einzustellen.

Gemäß einem Ausführungsbeispiel wird vorgeschlagen, dass der Regalsteherschenkel an der stirnseitigen Kante der Fahrschiene in einer dritten Schnittebene geschnitten ist. Es wird vorgeschlagen, dass die Flächennormale der dritten Schnittebene parallel zur Längsachse der Fahrschiene ist. Um die Fahrschiene am dem Regalsteher zu befestigen, hat die Fahrschiene im Bereich des Regalsteherschenkels Öffnungen zur Aufnahme von Befestigungsmitteln. Insbesondere Löcher oder Langlöcher können zur Aufnahme von Befestigungsmitteln, insbesondere Schrauben vorgesehen sein, um mit Hilfe der Befestigungsmittel die Fahrschiene an dem Regalsteher zu fixieren. Durch den Einsatz von Langlöchern kann ein Toleranzausgleich in vertikaler Richtung erfolgen. Wäre die dritte Schnittebene um die Querachse der Fahrschiene verschwenkt, wäre der Schnitt am Regalsteher schräg. Dann wäre das Befestigen der Fahrschiene am Regalsteher schwieriger, da die Befestigungsmittel dann je nach Richtung des Schnitts nach oben bzw. unten versetzt an dem Regalsteher befestigt werden müssten. Das wiederum erforderte ein entsprechend versetztes Lochraster am Regalsteher. Deshalb ist es sinnvoll, dass die dritte Schnittebene parallel zu der Flächennormalen der Lauffläche verläuft und insbesondere im montierten Zustand senkrecht ist.

Gemäß einem Ausführungsbeispiel wird vorgeschlagen, dass die an distalen Enden der Fahrschiene angeordneten Stirnkanten jeweils in der ersten, zweiten und/oder dritten Schnittebenen geschnitten sind, wobei die jeweiligen Schnittebenen an den jeweiligen distalen Enden parallel zueinander verlaufen. Die distalen Enden der Fahrschiene werden bevorzugt entlang parallel zueinander verlaufender Schnittebenen geschnitten. Dadurch verlaufen die stirnseitigen Kanten der distalen Enden parallel zueinander.

Gemäß einem Ausführungsbeispiel wird vorgeschlagen, dass der Führungsflächenschenkel und der Fahrflächenschenkel im Querschnitt winklig, insbesondere rechtwinklig zueinander sind. Die Lagermaschine kann mittels zumindest einer, bevorzugt zweier Laufrollen auf der Fahrfläche bewegt werden. Um die Lagermaschine entlang der Längsachse der Fahrschiene zu führen, kann eine Führungsfläche vorgesehen sein. Die Führungsfläche kann durch den Führungsflächenschenkel gebildet werden. An dieser Führungsfläche kann ein Führungsmittel angeordnet sein. Insbesondere sind beidseitig des Führungsflächenschenkels Führungsmittel vorgesehen. Wenn Führungsflächenschenkel und Laufflächenschenkel senkrecht zueinander verlaufen, können die Rotationsachsen von Laufrolle und Führungsrolle ebenfalls senkrecht zueinander sein. Die Führungsrollen sind an dem Führungsflächenschenkel geführt und sorgen somit dafür, dass die Laufrollen auf der Fahrfläche geführt sind.

Gemäß einem Ausführungsbeispiel wird vorgeschlagen, dass der Führungsflächenschenkel und der Regalsteherschenkel im Querschnitt im Wesentlichen parallel zueinander sind. Dies ermöglicht einen kompakten Aufbau der Fahrschiene. Außerdem ist diese Anordnung vorteilhaft, um die Führungsrollen von bekannten Lagermaschinen an dem Führungsflächenschenkel entlang zu führen.

Gemäß einem Ausführungsbeispiel wird vorgeschlagen, dass der Regalsteherschenkel (und somit insbesondere auch die Anbaufläche) L-förmig abgekantet ist, derart, dass ein abgekanteter Bereich im Wesentlichen parallel zu der Fahrfläche verläuft. Ein Abkanten des Regalsteherschenkels auf der der Fahrfläche abgewandten Seite führt zu einer Erhöhung des Flächenträgheitsmoments der Fahrschiene und somit zu einer erhöhten Steifigkeit der Fahrschiene.

Es wird auch vorgeschlagen dass der Regalsteherschenkel U-förmig abgekantet ist, derart, dass ein erster Schenkel des abgekanteten Bereichs im Wesentlichen parallel zu der Fahrfläche verläuft und ein zweiter Schenkel des abgekanteten Bereichs im Wesentlichen parallel zu der Anbaufläche verläuft. Dieses weitere Abkanten entlang der der Fahrfläche abgewandten Seite führt zu einer weiteres Versteifung der Fahrschiene.

Ein weiterer Aspekt ist Regal mit einer ersten Fahrschiene wie zuvor beschrieben und einer zweiten Fahrschiene wie zuvor beschrieben, wobei die Fahrschienen in Längsrichtung in einer selben Regalebene verlaufen und mit ihren stirnseitigen Kanten auf Stoß zueinander angeordnet sind, derart, dass die Schnittebenen der ersten und der zweiten Fahrschiene zueinander im Wesentlichen parallel zueinander sind. Hierdurch wird der Übergang zwischen den Fahrschienensegmenten hinsichtlich des Eintauchens der Laufrollen optimiert. Die beiden einander zugewiesenen Stirnflächen der Fahrschienen sind am Stoß kongruent zueinander.

Gemäß einem Ausführungsbeispiel wird vorgeschlagen, dass Fahrschienen von zwei aneinander angrenzenden Fahrschienensegmenten mit einem Abstand ihrer stirnseitigen Kanten zueinander von weniger als 20mm, bevorzugt weniger oder gleich 12mm, am Regal montiert sind. Es hat sich gezeigt, dass ein Spalt kleiner 20mm insbesondere kleiner 12mm durch die beschriebene Konfiguration der stirnseitigen Kanten der Fahrschienen tolerabel ist. Die Laufrollen können im Wesentlichen ruckelfrei über einen solchen Spalt mit der beanspruchten Konfiguration geführt werden.

Gemäß einem Ausführungsbeispiel wird vorgeschlagen, dass eine Fahrschiene mit ihrer Anbaufläche an einem Regalsteher montiert ist. Dadurch können die Fahrschienen am Regal fixiert werden.

Gemäß einem Ausführungsbeispiel wird vorgeschlagen, dass jeweils zwei in Längsrichtung parallel zueinander, in Querrichtung beabstandet voneinander, in derselben Regalebene angeordnete Fahrschienen ein Fahrschienensegment einer Fahrgasse bilden. Die Lagermaschine kann auf zwei parallelen Fahrschienen einer Fahrgasse gelagert sein.

Gemäß einem Ausführungsbeispiel wird vorgeschlagen, dass Fahrschienensegmente in einer selben Regalebene parallel zu einer Längsachse der Regalebene verlaufen. Diese Fahrschienensegmente können Längsgassen des Regals bilden. Auch wird vorgeschlagen, dass Fahrschienensegmente in einer selben Regalebene quer zu der Längsachse der Regalebene verlaufen. Diese Fahrschienensegmente können Quergassen des Regals bilden. Auch wird vorgeschlagen, dass zumindest ein Fahrschienensegment winklig zu der Regalebene verläuft und zwei vertikal zueinander versetzte Regalebenen verbinden. Mit einem solchen Fahrschienensegment ist es möglich, eine Lagermaschine zwischen zwei vertikal voneinander beabstandeten Regalebenen zu bewegen.

Nachfolgend wird der Gegenstand anhand einer Ausführungsbeispiele zeigenden Zeichnung näher erläutert. In der Zeichnung zeigen:
- Fig. 1a: Eine Ansicht einer herkömmlichen Fahrschiene;
- Fig. 1b: Ein Querschnitt durch eine Fahrschiene;
- Fig. 2a: Ein Regallager mit Quer- und Längsgassen;
- Fig. 2b: Ein Regallager mit Quer- und Längsgassen;
- Fig. 3a: Eine Ansicht einer Fahrschienenstoßes mit verschiedenen Schnittebenen;
- Fig. 3b: Eine Ansicht eines Fahrschienenstoßes an einem Übergang zwischen zwei Fahrschienensegmenten gemäß einem Ausführungsbeispiel;
- Fig. 4: Eine Ansicht einer Fahrschiene mit zwei distalen Enden gemäß einem Ausführungsbeispiel;
- Fig. 5a-g: Fahrschienenprofile gemäß Ausführungsbeispielen;
- Fig. 6a: eine Ansicht eines Fahrschienenstoßes an einem Übergang zwischen zwei Fahrschienensegmenten gemäß einem Ausführungsbeispiel;
- Fig. 6b: eine Ansicht des Fahrschienenstoßes nach Fig. 6a;
- Fig. 7a: eine Ansicht eines Fahrschienenstoßes an einem Übergang zwischen zwei Fahrschienensegmenten gemäß einem Ausführungsbeispiel;
- Fig. 7b: eine Ansicht des Fahrschienenstoßes nach Fig. 7a.

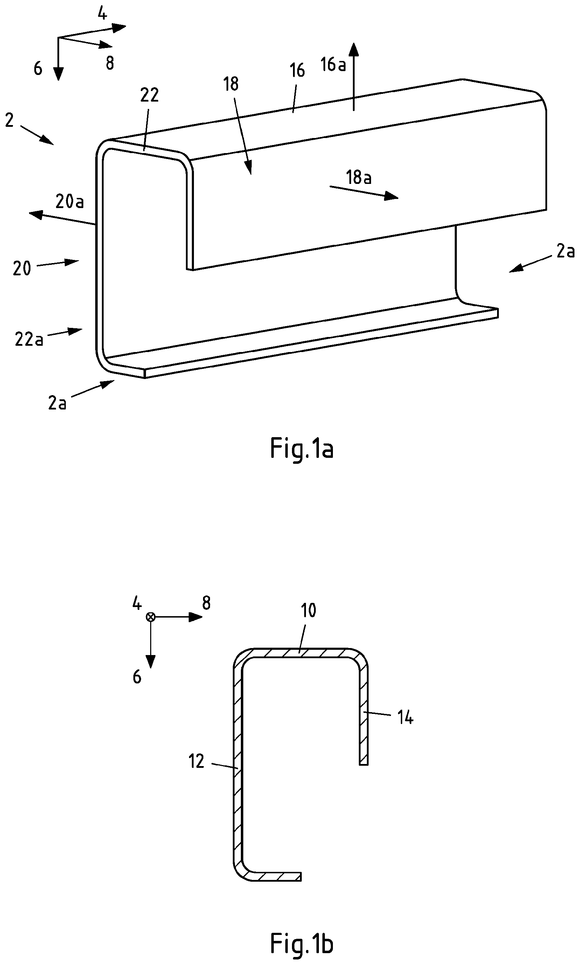

Figur 1a zeigt eine herkömmliche Fahrschiene 2. Zur besseren Orientierung werden zunächst die verschiedenen Achsen, Richtungen, Ebenen, Schenkel und dergleichen einer Fahrschiene 2 beschrieben. Diese Beschreibung soll nicht als abschließend verstanden werden und Abweichungen hiervon sind im Rahmen der hiesigen Beschreibung möglich. Dennoch dient die nachfolgende Beschreibung als Orientierungspunkt für die im hiesigen Dokument genannten Achsen, Richtungen, Ebenen, Schenkel und dergleichen.

Die Fahrschiene 2 erstreckt sich entlang einer Längsachse 4. Senkrecht zu der Längsachse 4 verläuft eine Hochachse 6 und eine Querachse 8. In der Figur 1b, welche einen Querschnitt durch eine Fahrschiene 2 zeigt, ist die Längsachse 4 senkrecht zur Zeichenebene verlaufend. Auch sind die Hochachse 6 und die Querachse 8 zu erkennen.

Längsachse 4, Hochachse 6 und Querachse 8 können auch als Längsrichtung 4, Hochrichtung 6 und Querrichtung 8 verstanden werden. Die Begriffe Achse und Richtung können synonym verwendet werden. Die Hochachse 6 und die Querachse 8 spannen eine Querschnittsebene auf. Ein Querschnitt entlang der Querschnittsebene durch eine Fahrschiene 2 ist in der Figur 1b gezeigt.

In der Figur 1b ist zu erkennen, dass die Fahrschiene 2 mehrere Schenkel aufweist. Ein erster Schenkel kann als Fahrflächenschenkel 10 verstanden werden. Der Fahrflächenschenkel 10 erstreckt sich in der Querachse 8. An den Fahrflächenschenkel 10 angrenzend kann ein Regalsteherschenkel 12 anschließen. Der Regalsteherschenkel 12 erstreckt sich entlang der Hochachse 6. Auf der dem Regalsteherschenkel 12 gegenüberliegenden Seite des Fahrflächenschenkels 10 kann sich ein Führungsflächenschenkel 14 erstrecken. Der Führungsflächenschenkel 14 erstreckt sich entlang der Hochachse 6. Der Führungsflächenschenkel 14 und der Regalsteherschenkel 12 können parallel zueinander verlaufen. An dem Regalsteherschenkel 12 kann an der dem Fahrflächenschenkel abgewandten Seite eine Abkantung vorgesehen sein. Die gezeigte Abkantung ist L-förmig, es ist aber auch eine U-förmige Abkantung möglich.

Entlang einer durch die Querachse 8 und die Längsachse 4 aufgespannten Ebene verläuft eine Fahrfläche 16. Entlang einer durch die Längsachse 4 und die Hochachse 6 aufgespannten Ebene verläuft eine Führungsfläche 18. Entlang einer parallel dazu verlaufenden Ebene verläuft eine Anbaufläche 20.

Eine Flächennormale 16a der Führungsfläche 16 verläuft parallel zu der Hochachse 6. Eine Flächennormale 18a der Führungsfläche 18 verläuft parallel zu der Querachse 8. Eine Flächennormale 20a der Anbaufläche 20 verläuft parallel zu der Querachse 8. Die Flächennormalen 18a, 20a können antiparallel zueinander sein.

Die Fahrschiene 2 hat zwei einander gegenüberliegende distale Enden 2a. An einem jeweiligen distalen Ende 2a kann eine stirnseitige Kante 22 liegen. An der stirnseitigen Kante kann sich eine Stirnfläche 22a der Fahrschiene 2 ausbilden.

Die gezeigten Ausrichtungen, Schenkel, Achsen, Flächen, Flächennormalen und dergleichen gelten auch für die nachfolgenden Ausführungsbeispiele. Im Vergleich zu der in Fig. 1a, b gezeigten Fahrschiene haben die Ausführungsbeispiele veränderte Stinkanten 22 und oder Stirnflächen 22a.

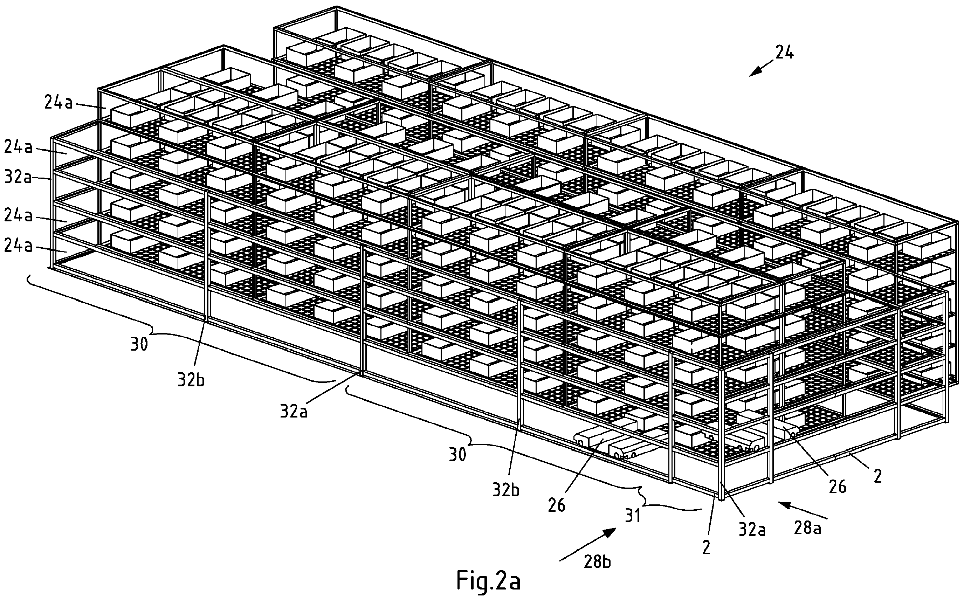

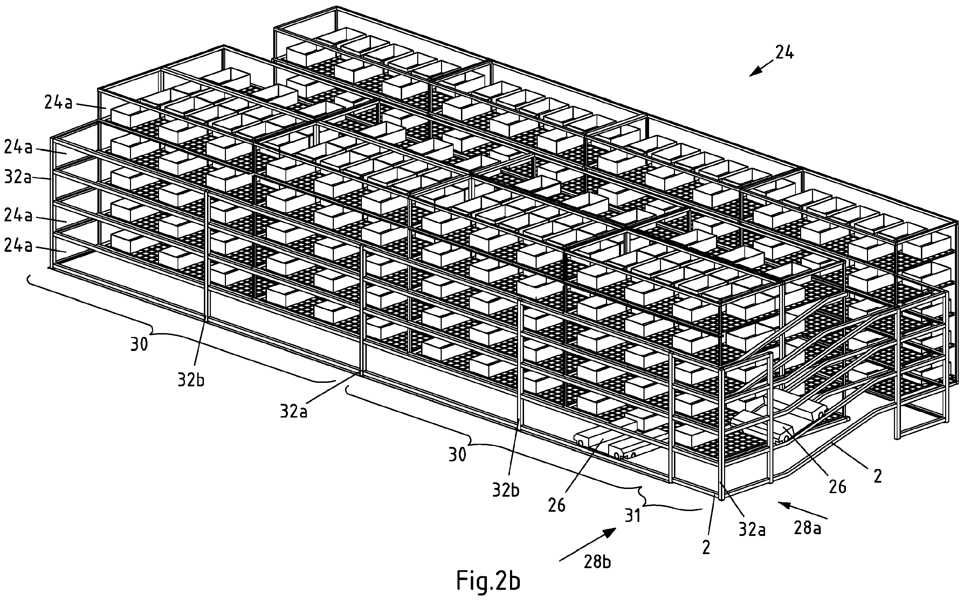

Figur 2a, b zeigen ein Hochregallager 24. An dem Hochregallager 24 sind eine Vielzahl von Regalebenen 24a übereinander angeordnet. In jeder der Regalebenen 24a können sich Lagermaschinen 26 entlang von Gassen bewegen. Dabei können Längsgassen 28a und Quergassen 28b durch ein oder mehrere Fahrschienensegmente gebildet sein. Ein Fahrschienensegment kann durch zwei parallel in einer Regalebene 24 verlaufende Fahrschienen 2 gebildet sein. Die Lagermaschinen 26 können auf diesen Fahrschienen 2 rollend gelagert sein. Eine Längsgasse 28a kann durch mehrere Fahrschienensegmente 30 gebildet sein. Fahrschienensegmente 30 können im Bereich von Regalstehern 32a aneinander stoßen. Ein Fahrschienensegment 30 kann sich über mehrere Regalsteher 32a, 32b erstrecken. Hierbei dann z.B. an jedem 2., 3. oder 4, Regalsteher 32a ein Stoß von zwei angrenzenden Fahrschienen 2 liegen. Die aneinander stoßenden Fahrschienen 2 können jeweils an einem Regalsteher 32a befestigt sein. Die Fahrschienen können darüber hinaus auch an den Regalstehern 32b befestigt sein. An den Übergängen (Stößen) zwischen den Fahrschienensegmenten 30 bilden sich Spalte zwischen einander angrenzenden Fahrschienen 2. Dies gilt für Längsgassen 28a als auch Quergassen 28b. Auch kann ein Fahrschienensegment 31 sich auch nur zwischen zwei Regalstehern erstrecken.

Fig. 2a zeigt zwei Lagermaschinen 26 die sich jeweils in einer Längsgasse 28a und einer Quergasse 28b bewegen. Die Lagermaschinen 26 können durch geeignete Mechaniken an ihren Laufrollen und Führungsrollen, die bedarfsweise abgesenkt und angehoben werden können, entweder auf einer Längsgasse 28a oder einer Quergasse 28b geführt werden. Sowohl in einer Längsgasse 28a als auch in einer Quergasse 28b kann es zu Stößen an angrenzenden Fahrschienen 2 kommen. Es sei angemerkt, dass die Fig. 2a als auch die Fig. 2b nur schematisch ein Hochregal 24 zeigen. Wesentlich ist, dass zu erkennen ist, dass entlang einer Gasse zwei Fahrschienen in Längsrichtung aneinander angrenzen können und dort Stöße sind. Auch soll gezeigt sein, dass sich eine Fahrschiene über mehr als 2 Regalsteher Abstände erstrecken kann. An einem Regalsteher 32a kann ein Stoß zweier Fahrschienen 2 liegen.

Fig. 2b zeigt das Hochregallager nach Fig. 2a mit dem Unterschied, dass in einer Gasse 28a, 28b auch eine vertikale Bewegung einer Lagermaschine 26 möglich ist. Eine Fahrschiene 2 kann sich zwischen zwei vertikal benachbarten Regalebenen 24a erstrecken und diese Ebenen 24a miteinander verbinden. Eine Lagermaschine 2 kann somit von einer Regalebene 24a in eine andere Regalebene 24a entlang einer Fahrschiene 2 bewegt werden.

Die gegenständliche Aufgabe bestand darin, den Effekt des Eintauchens der Fahrrollen der Lagermaschinen 26 in derartige Spalte zu verringern. Hierzu wird vorgeschlagen, dass an zumindest einem, bevorzugt beiden distalen Enden 2a einer Fahrschiene 2 die stirnseitige Kante 22 winklig zur Querachse verläuft, wie in den nachfolgenden Figuren gezeigt.

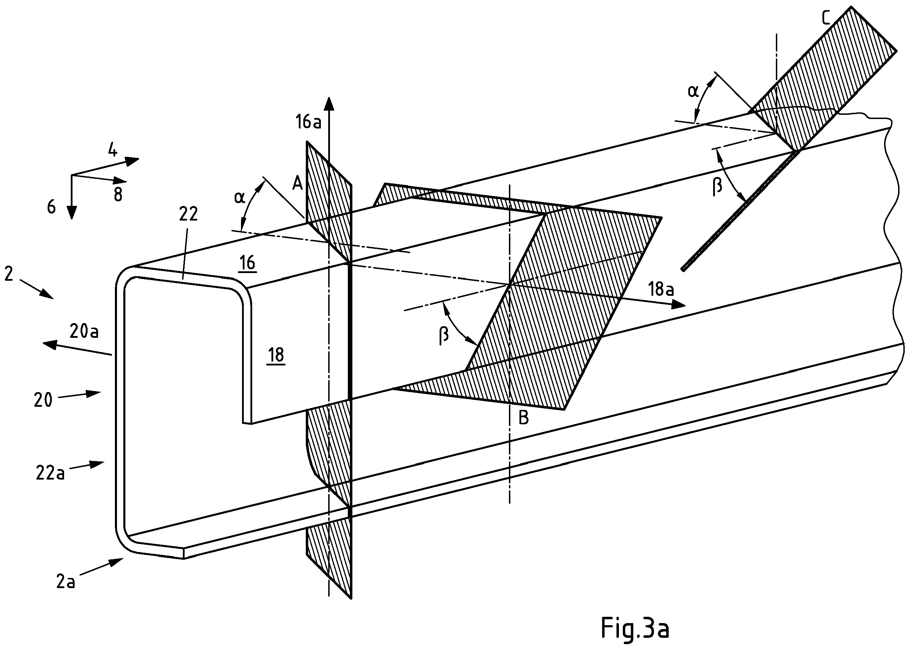

Fig. 3a zeigt die möglichen Schnittebenen durch die Fahrschiene 2.

Zu erkennen ist eine erste Schnittebene A. Diese erste Schnittebene A kann parallel zu der Flächennormalen 16a der Fahrfläche 16 verlaufen. Darüber hinaus ist diese Schnittebene A um die Flächennormale 16a gedreht. Die Schnittebene A kann um einen Winkel α zu der Querachse 8 verschwenkt sein.

Eine zweite Schnittebene B ist gezeigt. Diese zweite Schnittebene B kann parallel zu der Flächennormalen 18a der Führungsfläche verlaufen. Darüber hinaus ist diese Schnittebene B um die Flächennormale 18a gedreht. Die Schnittebene B kann um einen Winkel β zu der Hochachse 6 verschwenkt sein.

Eine dritte Schnittebene C ist gezeigt. Diese dritte Schnittebene kann eine Kombination der Drehungen der ersten und zweiten Schnittebene enthalten. Die dritte Schnittebene C verläuft in einem Winkel β zu der Flächennormalen 18a und einem Winkel α zu der Flächennormalen 16a. Diese Schnittebene C ist sowohl um die Flächennormale 18a als auch die Flächennormale 16a verschwenkt.

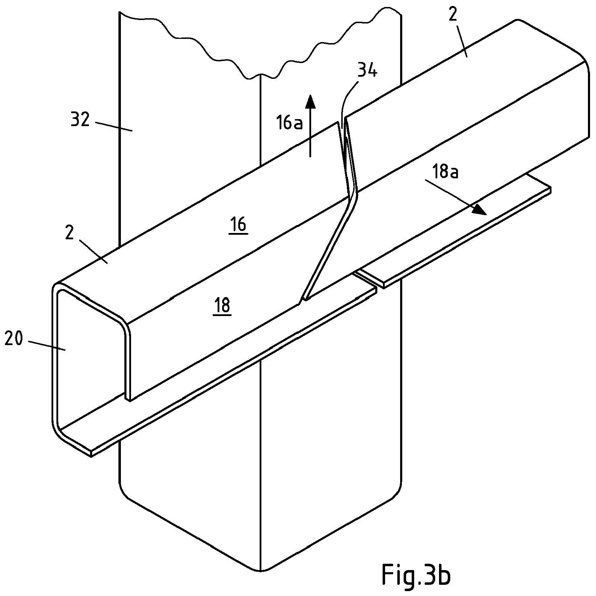

Figur 3b zeigt den Verlauf eines Spalts 34 an einem Stoß zwischen zwei Fahrschienen 2, welche an einem Regalsteher 32a montiert sind. Der Schnittebene kann die zuvor beschriebene Ebene C sein.

Die stirnseitige Kante 22 an der Fahrfläche 16 verläuft winklig zu der Flächennormalen 16a. Die stirnseitige Kante 22 der Führungsfläche 14 verläuft winklig zu der Flächennormalen 18a. Die Stirnfläche 22a an der Fahrfläche 16 verläuft winklig zu der Querachse 8. Die Stirnfläche 22a der Führungsfläche 14 verläuft winklig zu der Flächennormalen 16a.

Zu erkennen ist, dass der Spalt 34 im Bereich der Fahrfläche 16 um die Flächennormale 16a verschwenkt ist und dass der Spalt 34 im Bereich der Führungsfläche 18 um die Flächennormale 18a der Führungsfläche 18 verschwenkt ist. Ferner ist zu erkennen, dass der Spalt 34 im Bereich der Anbaufläche 20 parallel zur Hochachse 6 verläuft.

Der Spalt 34 verläuft im Bereich der Fahrfläche 16 und der Führungsfläche 18 in bevorzugt entlang einer gemeinsamen ersten Schnittebene und im Bereich der Anbaufläche 20 entlang einer davon verschiedenen dritten Schnittebene. Die erste Schnittebene ist bevorzugt verschwenkt sowohl um die Flächennormale 16a als auch die Flächennormale 18a. Die dritte Schnittebene verläuft bevorzugt parallel zu beiden Flächennormalen 16a und 18a.

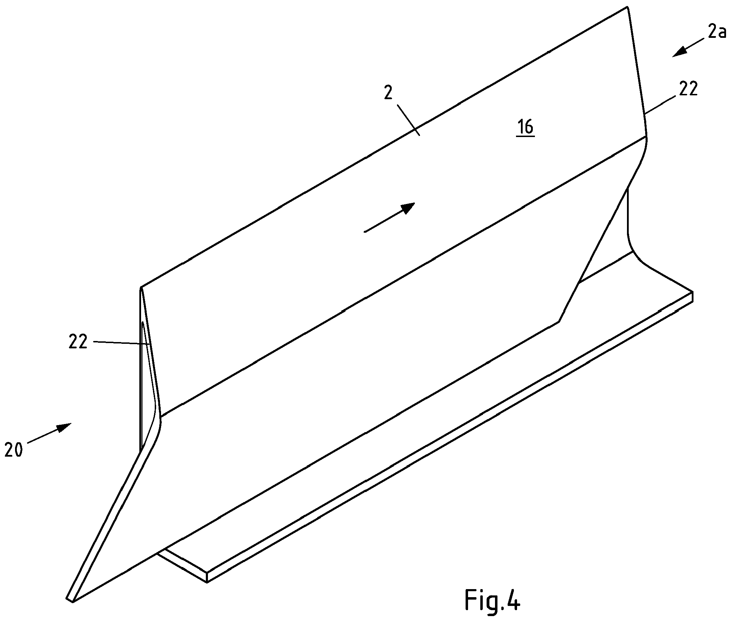

Figur 4 zeigt eine Gesamtansicht einer Fahrschiene 2. Zu erkennen ist, dass an beiden distalen Enden 2a die stirnseitigen Kanten 22 entlang einer Schnittebene C geschnitten sind. Bevorzugt sind die Schnittebenen an den beiden distalen Enden 2a parallel zueinander.

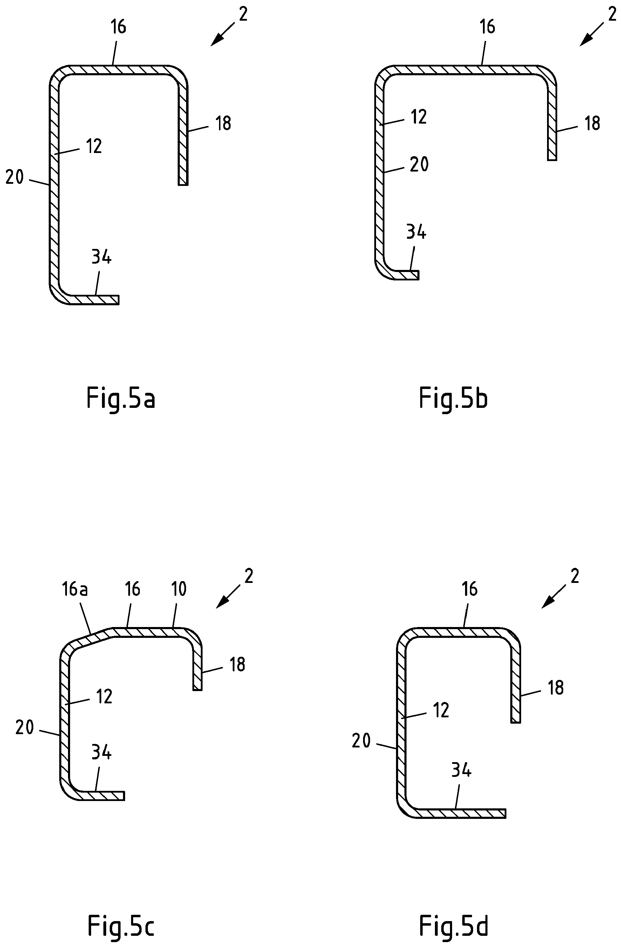

Die Figuren 5a-g zeigen diverse Querschnittsprofile von Fahrschienen 2.

Figur 5a zeigt ein Querschnittsprofil einer Fahrschiene 2 mit einer Fahrfläche 16. Eine Laufrolle wird auf der Fahrfläche 16 bewegt. Seitlich der Fahrfläche 16 erstreckt sich eine Führungsfläche 18. Die Führungsfläche 18 verläuft senkrecht zur Fahrfläche 16. An der Führungsfläche 18 sind Führungsrollen geführt. Insbesondere sind die Führungsrollen beidseitig der Führungsfläche 18 geführt. Auf der gegenüberliegenden Seite der Führungsfläche 18 bezogen auf die Fahrfläche 16 liegt die Anbaufläche 20. Anbaufläche 20 verläuft parallel zur Führungsfläche 18. Auf der der Fahrfläche 16 abgewandten Seite der Anbaufläche 20 kann eine Abkantung 34 vorgesehen sein. An der Anbaufläche 20 sind bevorzugt Langlöcher vorgesehen, um eine Montage an einem Regalsteher 24a zu ermöglichen.

Um Missverständnisse zu vermeiden, sei angemerkt, dass die Fahrfläche 16 auch als Fahrflächenschenkel 10, die Führungsfläche 18 auch als Führungsflächenschenkel 14 und die Anbaufläche 20 als Regalsteherschenkel 12 bezeichnet werden kann. Dies gilt für die gesamte Beschreibung. Ferner sei angemerkt, dass der Begriff "Fläche" nicht den geometrischen Begriff einer Ebene ohne Ausdehnung in einer Tiefenrichtung meint, sondern vielmehr als Bezeichnung für den sich flächig ausbreitenden Schenkel genutzt wird.

Figur 5b zeigt ein weiteres Ausführungsbeispiel einer Fahrschiene 2. Wie in diesem Querschnittsprofil zu erkennen ist, ist gegenüber der Figur 5a die Fahrfläche 16 verbreitert. Die Führungsschiene 2 gemäß der Figur 5a ist für Lagermaschinen mit schmalen Rollen gedacht, wohingegen die Führungsschiene 2 gemäß der Figur 5b für Lagermaschinen mit breiteren Rollen gedacht ist. Im Unterschied zu der Figur 5a ist der Abstand zwischen Führungsfläche 18 und Anbaufläche 20 größer. Ansonsten unterscheiden sich die beiden Querschnittsprofile nicht wesentlich.

Figur 5c zeigt ein weiteres Ausführungsbeispiel, bei dem eine oben liegende Fahrfläche 16 vorgesehen ist. Im Unterschied zu den Figuren 5a und 5b geht der Fahrflächenschenkel 10 nicht unmittelbar mit einem Biegeradius in den Regalsteherschenkel 12 über, sondern ein Übergangsbereich 16a ist vorgesehen, der ausgehend von der Fahrfläche 16 hin zur Anbaufläche 20 geneigt ist, jedoch einen Neigungswinkel von weniger als 90°, insbesondere weniger als 45° hat.

Figur 5d zeigt ein weiteres Ausführungsbeispiel, welches den Ausführungsbeispielen gemäß Figur 5a und 5b ähnelt. Im Unterschied hierzu ist die Abkantung 34 größer, d.h. hat eine größere Erstreckung in der Querrichtung 8.

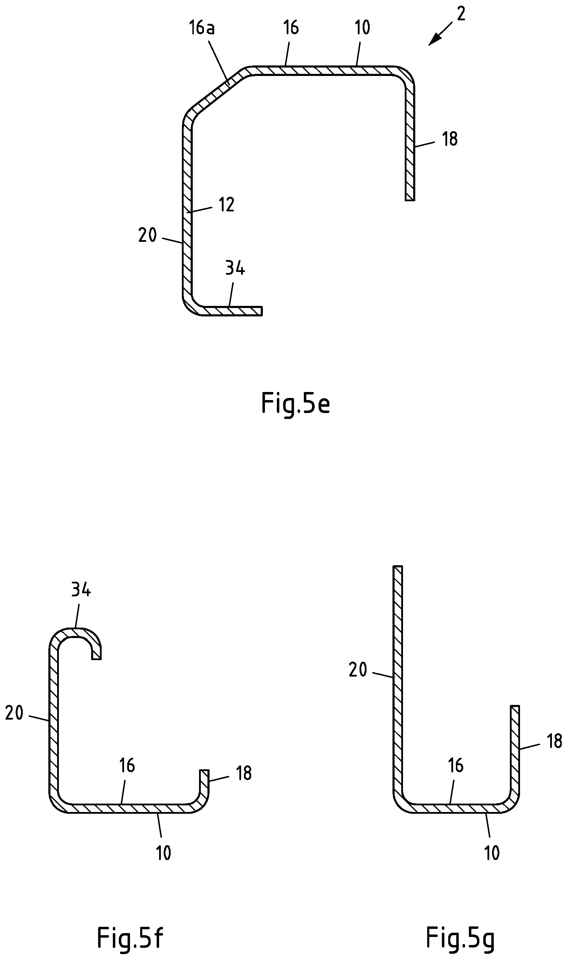

Figur 5e zeigt eine Fahrschiene 2 ähnlich zu Figur 5c, wobei der Fahrflächenschenkel 10 breiter und der Führungsflächenschenkel 18 länger ist. Die Führungsschiene 2 gemäß der Figur 5c ist für Lagermaschinen mit schmalen Rollen gedacht, wohingegen die Führungsschiene 2 gemäß der Figur 5e für Lagermaschinen mit breiteren Rollen gedacht ist.

Bei den Ausführungsbeispielen gemäß den Figuren 5a-e ist eine nichtgezeigte Stromschiene vorzugsweise innenseitig des Profils an dem Regalsteherschenkel 12 vorgesehen. Die Stromschiene kann ein- oder zweiphasig sein und ist elektrisch isoliert gegenüber dem Material der Fahrschiene 2.

In dem Spalt zwischen der Führungsfläche 18 und der Abkantung 34 greift ein Stromabnehmer (nicht gezeigt) einer Lagermaschine (nicht gezeigt) ein und kommt in Kontakt mit der Stromschiene. Hierüber wird die Lagermaschine, respektive deren Motor elektrisch versorgt.

Die Figuren 5f und 5g zeigen Ausführungsbeispiele, bei dem die Fahrfläche 16 am Fahrflächenschenkel 10 innenliegend ist, d.h. dass eine Laufrolle innerhalb des Profils bzw. des von dem Profil aufgespannten Volumens angeordnet ist und auf der Fahrfläche 16 bewegt wird. Entsprechend den bisherigen Ausführungsbeispielen sind seitlich der Fahrfläche 16 Führungsfläche 18 und Anbaufläche 20 mit ihren jeweiligen Schenkeln 14, 12 vorgesehen.

Bei der Figur 5f ist zu erkennen, dass an dem der Führungsfläche 16 abgewandten Ende der Anbaufläche 20 eine doppelte Abkantung 34 vorgesehen ist, die für zusätzliche Stabilität sorgt.

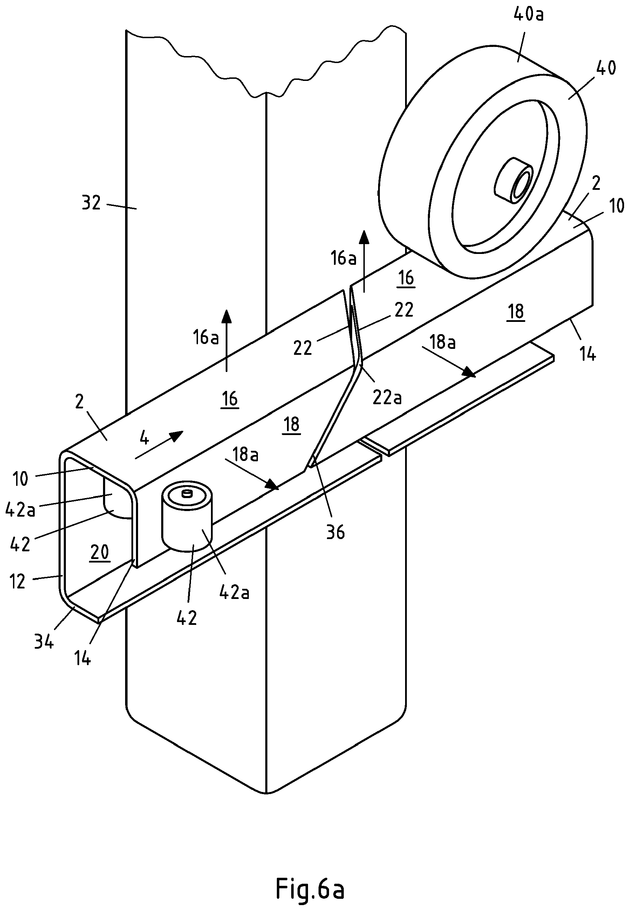

Figur 6a zeigt eine Ansicht einer Fahrschiene 2 mit einem Querschnittsprofil entsprechend der Figur 5a. In der Figur 6a ist zu erkennen, dass ein Spalt 36 zwischen zwei Fahrschienen 2 gebildet ist. Die stirnseitigen Kanten 22 der aneinander angrenzenden Fahrschienen 2 sind im Bereich der Fahrfläche 16 um die jeweiligen Flächennormalen 16a dieser Fahrflächen 16 verschwenkt. Darüber hinaus ist die Stirnfläche 22a der jeweiligen Fahrschienen 2 um die jeweilige Flächennormale 18a der jeweiligen Führungsflächen 18 geneigt. Durch diese beiden Neigungen bildet sich eine Schnittebene, die sowohl gegenüber der Flächennormalen 16a als auch der Flächennormalen 18a geneigt ist. Diese Schnittebene verläuft durch den Fahrflächenschenkel 16 als auch den Führungsflächenschenkel 14. Insbesondere ist dies eine einheitliche Schnittebene.

Der Spalt 36 erstreckt sich darüber hinaus von dem Fahrflächenschenkel 10 in den Regalsteherschenkel 12, mithin die Anbaufläche 20. Dort verläuft der Spalt 36 jedoch in einer anderen Schnittebene. Diese Schnittebene verläuft bevorzugt parallel zu den beiden Flächennormalen 16, 18a und erstreckt sich durch den Regalsteherschenkel 12 und die Abkantung 34. Mit anderen Worten verlaufen die Stirnflächen 22a entlang der Fahrflächenschenkel 10 und Führungsflächenschenkel 14 entlang einer ersten Schnittebene und entlang des Regalsteherschenkels 12 und einer optionalen Abkantung 34 in einer dritten Schnittebene.

Wie zu erkennen ist, läuft auf den Fahrschienen 2 eine Laufrolle 40. Die Laufrolle 40 ist mit einer Lagermaschine verbunden. Die Laufrolle 40 dient zur Bewegung der Lagermaschine entlang der Längsachse 4. An einem Stoß zwischen zwei Fahrschienen im Bereich eines Regalstehers 32 ist der Spalt 36 respektive die stirnseitigen Kanten 22 sowie die Stirnflächen 22a der aneinander anstoßenden Fahrschienen 2 wie beschrieben geschnitten. Dies führt dazu, dass die Laufrolle 40 über den Spalt 36 geführt werden kann, ohne dass diese maßgeblich in den Spalt 36 eintaucht. Vielmehr liegt die Laufrolle 40 mit ihrer Lauffläche 40a bevorzugt stets auf zumindest einer der Fahrflächen 16 der beiden Fahrschienen 2 auf.

Um die Laufrolle 40 mit ihrer Laufrolle 40a auf der Fahrfläche 16 während der Bewegung halten zu können, sind Führungsrollen 42 beidseitig des Führungsflächenschenkels 14 angeordnet. Die Führungsrollen 42 sind ebenfalls mit der Lagermaschine verbunden. Die Führungsrollen 42 gleiten mit ihren Rollflächen 42a entlang der Führungsfläche 18 respektive des Führungsflächenschenkels 14. Entsprechend der Laufrolle 40 gleiten die Führungsrollen 42 über den Spalt 36 entsprechend ohne in den Spalt 36 eintauchen zu müssen, da der Spalt 36 in der beschriebenen Art und Weise geschnitten ist.

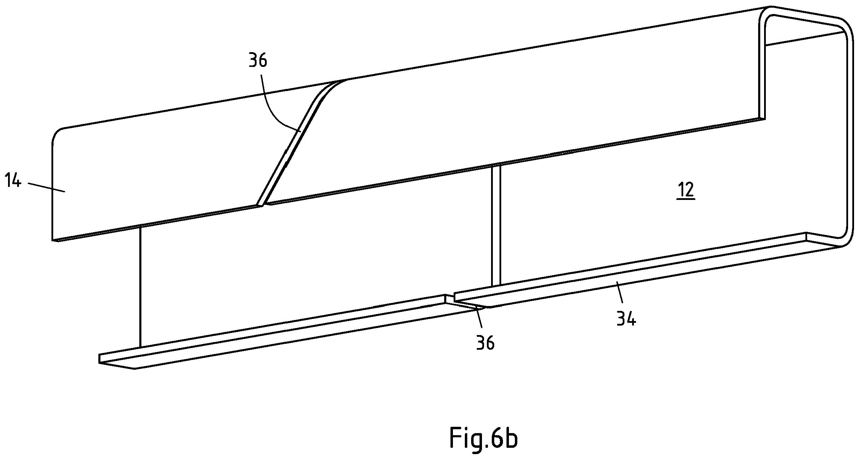

Figur 6b zeigt die beiden Fahrschienen 2 in einer Ansicht von unten. Zu erkennen ist, wie sich der Spalt 36 durch den Regalsteherschenkel 12 und die Abkantung 34 erstreckt. Ferner ist zu erkennen, wie am Führungsflächenschenkel 14 der Spalt 36 gegenüber der Flächennormalen 18a verschwenkt ist.

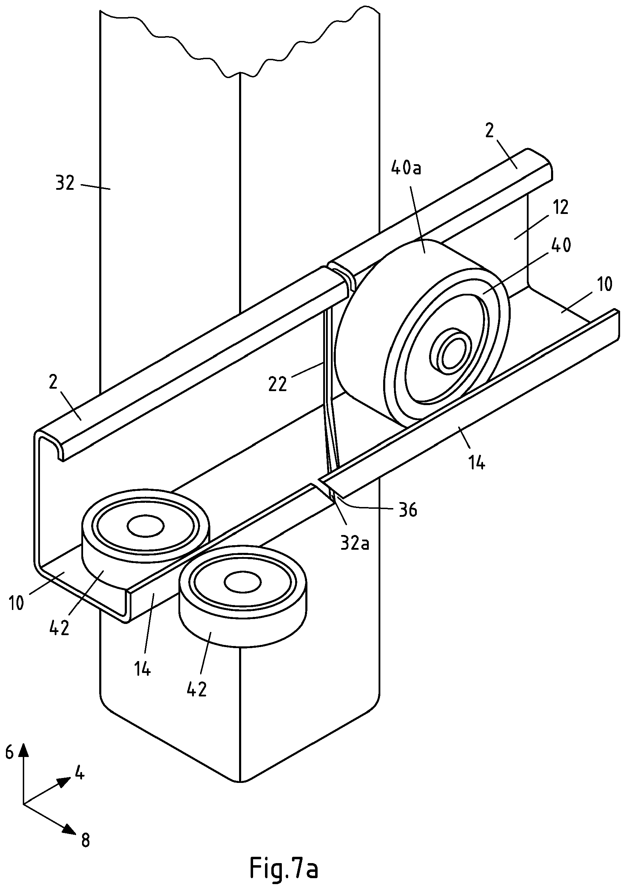

Figur 7a zeigt ein weiteres Ausführungsbeispiel eines Stoßes zwischen zwei Fahrschienen 2. Hierbei sind die Fahrschienen 2 mit einem Querschnittsprofil entsprechend Figur 5f geformt. Erneut ist zu erkennen, dass der Spalt 36 respektive die stirnseitigen Kanten 22 sowie die Stirnflächen 22a im Bereich des Führungsflächenschenkels 14 sowie des Fahrflächenschenkels 10 entlang einer ersten geneigten Schnittebene verlaufen. Am Regelsteherschenkel 12 verläuft eine andere Schnittebene, die parallel zur Hochachse 6 und Querachse 8 verläuft.

In dem gezeigten Beispiel ist die Laufrolle 40 innenseitig des Fahrflächenschenkels 10 geführt und läuft mit ihrer Lauffläche 40a über den Spalt 36. Durch die beschriebene Schnitteben kommt es zu einer Verhinderung des Eintauchens der Laufrolle 40 in den Spalt 36. Selbiges gilt für die Führungsrollen 42.

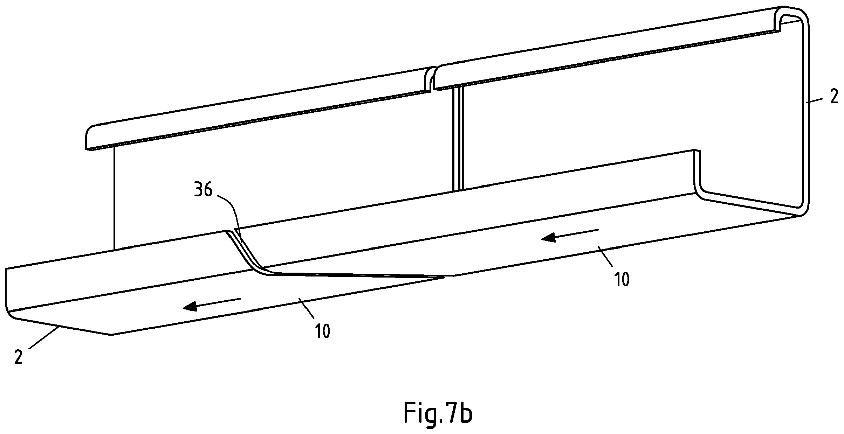

Figur 7b zeigt die Fahrschienen 2 gemäß der Figur 7a in einer Ansicht von unten. Hier ist zu erkennen, wie der Spalt 36 entlang einer Schnittebene geneigt zu den Flächennormalen 16a und 18a durch die Fahrflächenschenkel 10 verläuft.

Mit Hilfe der geneigten Schnittebenen entlang der distalen Enden 2a respektive der stirnseitigen Kanten 22 sowie der Stirnflächen 22a der Fahrschienen 2 werden mechanische Belastungen eines Regals durch die Bewegung von Lagermaschinen reduziert.

## Patentansprüche

1. Fahrschiene, insbesondere für ein Regal eines Regallagers, wobei
- die Fahrschiene sich entlang einer Längsachse erstreckt und
- die Fahrschiene ein Querschnittsprofil mit zumindest drei Schenkeln hat, derart, dass
- ein erster der Schenkel ein Fahrflächenschenkel ist, der zusammen mit der Längsachse der Fahrschiene eine Fahrfläche für eine Lagermaschine aufspannt,
- ein zweiter der Schenkel ein Führungsflächenschenkel ist, der zusammen mit der Längsachse der Fahrschiene eine Führungsfläche aufspannt, und
- ein dritter der Schenkel ein Regalsteherschenkel ist, der zusammen mit der Längsachse der Fahrschiene eine Anbaufläche für einen Regalsteher aufspannt, **dadurch gekennzeichnet,**
- **dass** der Fahrflächenschenkel an einer stirnseitigen Kante der Fahrschiene in einer ersten Schnittebene geschnitten ist, wobei die erste Schnittebene um eine Flächennormale der Fahrfläche verschwenkt ist.

2. Fahrschiene nach Anspruch 1,
**dadurch gekennzeichnet,**
- **dass** die erste Schnittebene parallel zu der Flächennormalen der Fahrfläche ist oder
- **dass** die erste Schnittebene um eine Querachse der Fahrschiene verschwenkt ist.

3. Fahrschiene nach Anspruch 1 oder 2,
**dadurch gekennzeichnet,**
- **dass** die erste Schnittebene um 30° bis 60° um die Flächennormale der Fahrfläche verschwenkt ist und/oder
- **dass** die erste Schnittebene um 30° bis 60° um die Querachse der Fahrschiene verschwenkt ist.

4. Fahrschiene nach einem der vorangegangenen Ansprüche,
**dadurch gekennzeichnet,**
- **dass** der Führungsflächenschenkel an der stirnseitigen Kante der Fahrschiene in einer zweiten Schnittebene geschnitten ist, wobei die zweite Schnittebene um eine Querachse der Fahrschiene verschwenkt ist.

5. Fahrschiene nach Anspruch 4,
**dadurch gekennzeichnet,**
- **dass** die zweite Schnittebene parallel zur Querachse der Fahrschiene ist oder
- **dass** die zweite Schnittebene um eine Flächennormale der Fahrfläche verschwenkt ist.

6. Fahrschiene nach Anspruch 4 oder 5,
**dadurch gekennzeichnet,**
- **dass** die zweite Schnittebene um 30° bis 60° um die Flächennormale der Fahrfläche verschwenkt ist und/oder
- **dass** die zweite Schnittebene um 30° bis 60° um die Querachse verschwenkt ist.

7. Fahrschiene nach einem der Ansprüche 4 bis 6,
**dadurch gekennzeichnet,**
- **dass** die erste und die zweite Schnittebene identisch sind.

8. Fahrschiene nach einem der vorangegangenen Ansprüche,
**dadurch gekennzeichnet,**
- **dass** der Regalsteherschenkel an der stirnseitigen Kante der Fahrschiene in einer dritten Schnittebene geschnitten ist, wobei die Flächennormale der dritten Schnittebene parallel zur Längsachse der Fahrschiene ist.

9. Fahrschiene nach einem der vorangegangenen Ansprüche,
**dadurch gekennzeichnet,**
- **dass** die an distalen Enden der Fahrschiene angeordneten stirnseitigen Kanten jeweils in der ersten, zweiten und/oder dritten Schnittebenen geschnitten sind, wobei die Schnittebenen der jeweiligen distalen Enden parallel zueinander verlaufen.

10. Fahrschiene nach einem der vorangegangenen Ansprüche,
**dadurch gekennzeichnet,**
- **dass** die Anbaufläche L-förmig abgekantet ist, derart, dass ein abgekanteter Bereich im Wesentlichen parallel zu der Fahrfläche verläuft und/oder
- **dass** die Anbaufläche U-förmig abgekantet ist, derart, dass ein erster Schenkel des abgekanteten Bereichs im Wesentlichen parallel zu der Fahrfläche verläuft und ein zweiter Schenkel des abgekanteten Bereichs im Wesentlichen parallel zu der Anbaufläche verläuft.

11. Regal mit einer ersten Fahrschiene nach einem der vorangehenden Ansprüche und einer zweiten Fahrschiene nach einem der vorangehenden Ansprüche, wobei die Fahrschienen in Längsrichtung in einer selben Lagerebene verlaufen und mit ihren stirnseitigen Kanten auf Stoß zueinander angeordnet sind, derart, dass die Schnittebenen der ersten und der zweiten Fahrschiene zueinander im Wesentlichen parallel zueinander sind.

12. Regal nach Anspruch 11,
**dadurch gekennzeichnet,**
- **dass** Fahrschienen von zwei aneinander angrenzenden Fahrschienensegmenten mit einem Abstand ihrer stirnseitigen Kanten zueinander von weniger als 20mm, bevorzugt weniger oder gleich 12mm, am Regal montiert sind.

13. Regal nach Anspruch 11 oder 12,
**dadurch gekennzeichnet,**
- **dass** jeweils zwei in Längsrichtung parallel zueinander, in Querrichtung beabstandet voneinander, in derselben Regalebene angeordnete Fahrschienen ein Fahrschienensegment einer Fahrgasse bilden.

14. Regal nach einem der vorangehenden Ansprüche,
**dadurch gekennzeichnet,**
- **dass** Fahrschienensegmente in einer selben Regalebene parallel zu einer Längsachse der Regalebene verlaufen und/oder Fahrschienensegmente in einer selben Regalebene quer zu der Längsachse der Regalebene verlaufen und/oder zumindest ein Fahrschienensegment winklig zu der Regalebene verläuft und zwei vertikal zueinander versetzte Regalebenen verbinden.

15. Verfahren für den Betrieb eines automatisierten Lagers mit einem Regal nach einem der Ansprüche 11 bis 14.
